(19) Europäisches Patentamt / European Patent Office / Office européen des brevets

(11) **EP 2 731 274 B1**

(12) **FASCICULE DE BREVET EUROPEEN**

(45) Date de publication et mention de la délivrance du brevet:
**26.09.2018 Bulletin 2018/39**

(51) Int Cl.:
*H04B 3/28* *(2006.01)*  *H04B 3/54* *(2006.01)*
*H04L 5/00* *(2006.01)*  *H04L 27/36* *(2006.01)*

(21) Numéro de dépôt: **14153757.1**

(22) Date de dépôt: **15.03.2010**

(54) **PROCÉDÉ ET UN DISPOSITIF DE RÉDUCTION DES INTERFÉRENCES ENTRE UN SIGNAL COURANT PORTEUR ET UN SIGNAL DE TYPE VDSL.**

VERFAHREN UND VORRICHTUNG ZUR INTERFERENZUNTERDRÜCKUNG ZWISCHEN EINES TRÄGERSTROMSIGNALS UND EINES SIGNALES DES TYPS VDSL

METHOD AND APPARATUS FOR REDUCING INTERFERENCES BETWEEN A POWER LINE SIGNAL AND A VDSL LIKE SIGNAL

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.03.2009 FR 0951739**

(43) Date de publication de la demande:
**14.05.2014 Bulletin 2014/20**

(62) Numéro(s) de document de la (des) demande(s) initiale(s) en application de l'article 76 CBE:
**10708216.6 / 2 409 411**

(73) Titulaire: **SAGEMCOM BROADBAND SAS**
**92500 Rueil Malmaison (FR)**

(72) Inventeur: **Samy, Roger**
**92500 RUEIL MALMAISON (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2008 247 537**

• **HAZEN M E: "The Technology Behind HomePlug AV Powerline Communications", COMPUTER, IEEE, US, vol. 41, no. 6, 1 juin 2008 (2008-06-01), pages 90-92, XP011228336, ISSN: 0018-9162, DOI: 10.1109/MC.2008.205**
• **LUKASZ ZBYDNIEWSKI ET AL: "Performance analysis of uncoded/coded windowed-OFDM and circular wavelet-OFDM transmission in PLC channel with bit-loading", SIGNALS AND ELECTRONIC SYSTEMS, 2008. ICSES '08. INTERNATIONAL CONFERENCE ON, IEEE, PISCATAWAY, NJ, USA, 14 septembre 2008 (2008-09-14), pages 423-426, XP031361799, ISBN: 978-83-88309-47-2**
• **AKIYAMA Y ET AL: "Influence of a PLC signal induced i.nto the modem on the communication performance of VDSL", ELECTROMAGNETIC COMPATIBILITY, 2003. EMC '03. 2003 IEEE INTERNATIONAL SYMPOSIUM ON ISTANBUL, TURKEY 11-16 MAY 2003, PISCATAWAY, NJ, USA,IEEE, vol. 1, 11 mai 2003 (2003-05-11), pages 197-200, XP010795657, ISBN: 978-0-7803-7779-0**

**Description**

La présente invention concerne un procédé et un dispositif de réduction des interférences entre un signal courant porteur transmis sur une ligne électrique et un signal de type VDSL transmis sur une ligne téléphonique qui est située à proximité de la ligne électrique.

Il est connu que des services numériques, tels que l'accès à Internet, la téléphonie par Internet ou encore la télévision haute définition, qui sont souvent regroupés par les opérateurs sous une offre appelée triple-play, sont distribués chez les abonnés à la fois par un réseau téléphonique mais également par un réseau électrique.

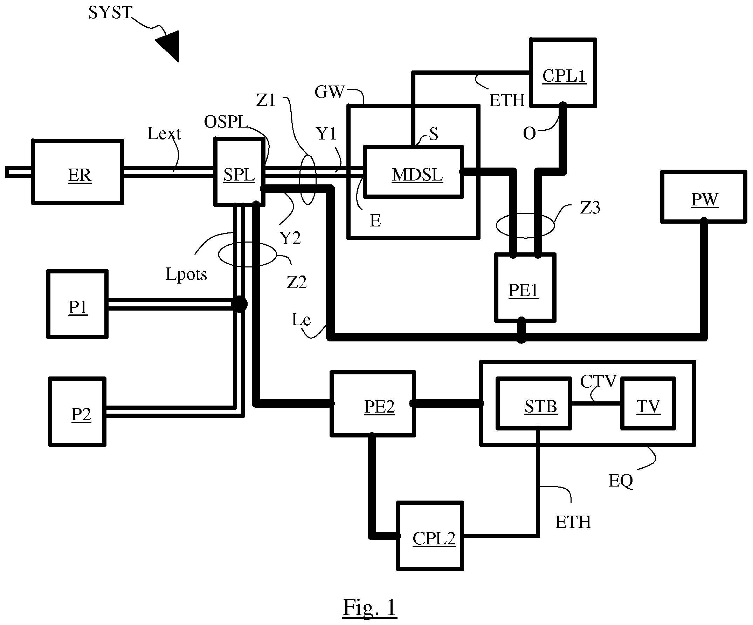

La Fig. 1 représente un exemple d'un système de distribution de tels services numériques jusqu'au domicile d'un abonné.

Le système SYST comporte un équipement réseau ER situé à la terminaison de la boucle locale et communément appelé DSLAM (Digital Subscriber Line Acess Multiplexer). Cet équipement réseau a pour fonction de regrouper le trafic des données transitant sur les lignes téléphoniques qui lui sont raccordées, et de rediriger ce trafic vers le réseau Internet une fois les différentes données multiplexées temporellement. L'équipement réseau ER effectue également l'opération inverse qui consiste à dé-multiplexer les données de trafic qui lui arrivent et qui sont destinées à l'abonné et à acheminer un signal porteur de ces données via une ligne téléphonique Lext. Généralement, la ligne Lext est formée d'une paire de câbles de cuivre représentée schématiquement sur la Fig. 1 par deux traits parallèles.

L'installation domestique d'un abonné peut comporter des postes téléphoniques P1 et P2 qui sont reliés à un réseau téléphonique privé formé d'une paire de câbles de cuivre schématiquement représenté sur la Fig. 1 par deux traits parallèles et désigné comme étant une ligne Lpots. Les postes P1 et P2 sont reliés à la ligne Lext via la ligne Lpots soit au travers de filtres dont la fonction est de ne laisser passer que les signaux de téléphonie, soit au travers d'un séparateur SPL (Master splitter en anglais) qui centralise cette fonction de filtrage.

L'installation domestique de l'abonné comporte également une passerelle GW qui est prévue pour recevoir le signal porté la ligne Lext sur l'un de ses ports E. Le port E de la passerelle GW peut être soit relié directement à la ligne Lext soit à un port OSPL du séparateur SPL.

La passerelle GW comporte un modem MDSL qui est relié au port E de la passerelle GW et à un autre port S de type Ethernet de la passerelle GW. Le modem MDSL est soit intégré, soit externe à la passerelle GW.

Le type du modem MDSL dépend de la technologie (norme) de transmission qui est mise en oeuvre. Historiquement, la technologie ADSL (Asymmetric Digital Subscriber Line en anglais) était (et est encore) utilisée mais l'invention se situe dans le cas des technologies de type VDSL (Very high bit rate DSL en anglais) et plus particulièrement de la norme VDSL2 (ITU G.993.2).

Les technologies de type VDSL définissent une chaîne de traitements de signal pour que des données soient transmises entre un émetteur et un voire plusieurs récepteurs.

Côté émetteur, les données à transmettre sont, habituellement, codées selon un code correcteur d'erreurs de type FEC (Forward Error Code en anglais), puis les codes obtenus sont mis en correspondance avec un symbole d'une constellation d'une modulation de type QAM (Quadrature Amplitude Modulation en anglais) ou PSK (Phase Shift Keying en anglais). La longueur de ces symboles, appelés par la suite symbole QAM, dépend de la dimension de la constellation de la modulation retenue : 4QAM, 16QAM,..., BPSK (Binary Phase Shift Keying en anglais). Les bits de chaque symbole QAM sont ensuite transmis par une modulation multi-porteuses de type OFDM (Orthogonal Frequency Division Multiplexing en anglais) dont les fréquences, dites porteuses, sont orthogonales entre elles et sont réparties dans une bande de fréquences réservée selon un plan de fréquence prédéterminé. Des symboles OFDM sont ensuite émis sur le canal de transmission.

Pour la technologie VDSL2, par exemple, la bande de fréquence réservée va de 2 à 30 Mhz et deux plans de fréquence (plan 9997 et 9998) sont définis, l'un est utilisé pour la transmission de signaux montants, c'est-à-dire de l'installation d'un abonné vers le réseau externe, et l'autre est utilisé pour la transmission de signaux descendants, c'est-à-dire du réseau externe vers l'installation de l'abonné. Les plans de fréquence sont définis par l'équation suivante :

$$F_k = F_0 + k.\Delta_F \quad (1)$$

avec $F_k$ une fréquence de porteuse d'indice $k$, $\Delta_F = \dfrac{1}{T_S}$ où $T_S$ est la durée d'un symbole OFDM et $F_0$ est une fréquence de porteuse initiale. La valeur de l'incrément de fréquence $\Delta_F$ vaut soit 8,6125 KHz soit 4,3125 KHz pour une durée $T_S$ égale à 232 $\mu s$.

Côté récepteur, les symboles QAM ainsi transmis sont obtenus à partir d'une démodulation des symboles OFDM reçus et les données sont alors obtenues par une démodulation des symboles QAM selon la constellation utilisée à l'émetteur suite à un décodage du code correcteur d'erreurs.

Les technologies de type VDSL utilisent un procédé, appelé bit loading en anglais, pour attribuer les bits de symbole QAM aux différentes fréquences porteuses. Ce procédé est mis en oeuvre par l'équipement ER. Il attribue à chaque fréquence porteuse $F_k$ un nombre de bits selon un rapport signal à bruit estimé du canal de transmission de la ligne téléphonique à la fréquence porteuse $F_k$. Les attributions des bits aux différentes fréquences porteuses sont réalisées indépendamment les unes des autres.

Deux approches sont généralement utilisées pour mettre en oeuvre le procédé pour attribuer les bits de symbole QAM à transmettre.

Selon la première, la capacité du canal de transmission est maximisée sous la contrainte que la valeur maximale de puissance d'émission de chaque fréquence porteuse respecte un profil de densité spectrale spécifique.

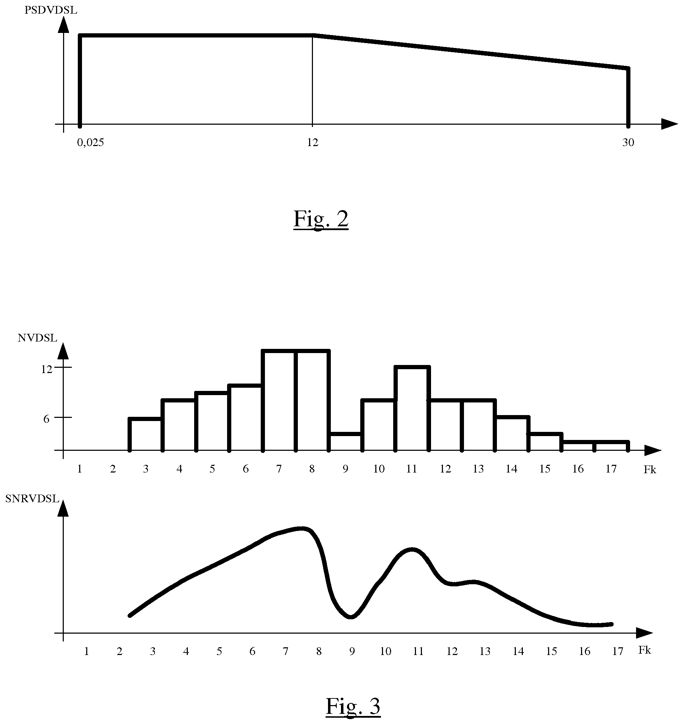

La Fig. 2 représente une illustration d'un profil de densité spectrale de puissance des fréquences porteuses selon une technologie de type VDSL sur la bande de fréquences réservée 25Khz-30MHz. On peut noter que le profil PSDVDSL de densité spectrale de puissance selon la technologie VDSL n'est pas constant sur la bande de fréquences réservée. En effet, de 25KHz à 12MHz, le profil PSDVSDL forme un palier. Par contre, au-delà de 12MHz, le profil PSDVDSL décroît jusqu'à la borne extrême de la bande de fréquences de 30 MHz. La décroissance du profil PSDVDSL provoque une plus grande sensibilité aux perturbations de la transmission des signaux de type VDSL sur les fréquences porteuses qui appartiennent à la plage de fréquences 12 MHz-30 MHz.

Selon la seconde approche, la puissance émise par porteuse est minimisée sous la contrainte d'une capacité de transmission fixée.

La Fig. 3 représente des chronogrammes illustrant un exemple d'attribution de bits aux différentes fréquences porteuses d'un plan de fréquence selon un rapport signal à bruit SNRVDSL estimé du canal de transmission d'une ligne téléphonique. Le chronogramme du haut représente le nombre de bits attribués NVDSL en fonction des fréquences de porteuses $F_k$ qui sont ici référencées 1 à 17. Sur l'axe vertical est porté le nombre de bits attribués à chaque fréquence $F_k$ et un rectangle centré sur chaque fréquence porteuse $F_k$ représente la largeur de la bande de fréquence autour de chaque fréquence porteuse. Le chronogramme du bas représente un exemple de rapport signal à bruit SNR estimé sur le canal VDSL de la ligne téléphonique Lpots.

Selon cet exemple, le rapport signal à bruit SNRVDSL est très élevé notamment pour les fréquences 7 et 8 pour lesquelles un nombre de bits maximal est attribué tout en respectant le profil de densité spectrale de puissance PSDVDSL. Il est très faible notamment pour les fréquences porteuses 3, 14, 15, 16 ou 17 pour lesquelles un nombre très faible de bits est attribué.

La particularité d'un système de distribution tel que celui de la Fig. 1 vient de l'utilisation d'un réseau électrique, en l'occurrence chez l'abonné, représenté schématiquement sur la Fig. 1 par la ligne Le, pour acheminer des flux haut débit du signal porté par la ligne Lext vers les différents équipements de l'abonné qui peuvent ainsi être très éloignés physiquement de la passerelle GW.

On parle alors de ligne courant porteur (CPL) ou de PLC (Power Line Communication) ou BPL (Broadband for Power Line) qui est mise en oeuvre sur ce réseau électrique.

Une ligne courant porteur CPL peut être, par exemple, conforme à la norme HomeplugAV (HomePlug PowerLine Alliance, "HomePlug AV baseline spécification," Version 1.0.00, Dec. 2005), ou la norme ITU G.hn par exemple ou basée sur la technologie développée par les sociétés UPA/OPERA ou Panasonic.

Ces normes (ou technologies) utilisent le même type de transmission que celui utilisé par les normes (technologie) de type VDSL, c'est-à-dire qu'ils utilisent, en outre, un code correcteur d'erreurs de type FEC, une modulation de type QAM ou PSK et une modulation multi-porteuses de type OFDM.

La bande de fréquences réservée va de 2 à 30 Mhz ou prochainement de 1 à 80 Mhz pour la norme ITU G.hn, les plans de fréquence sont définis par l'équation (1) pour des valeurs de durée d'un symbole OFDM égales soit à 40,95 $\mu s$, soit à 11,611 $\mu s$ selon la norme HomeplugAV, et la densité spectrale de puissance PSDCPL suit un profil constant sur toute la bande de fréquence réservée.

Un procédé pour attribuer les bits de symbole QAM aux différentes fréquences porteuses est également utilisé dont le principe est similaire à celui utilisé pour la technologie (norme) de type VDSL en considérant cette fois-ci un rapport signal à bruit estimé sur le canal de transmission de la ligne courant porteur.

La mise en oeuvre d'une technologie (norme) CPL requiert l'usage de modems particuliers, appelés modems courant porteur, qui sont reliés au réseau électrique. Un modem courant porteur comporte donc, en outre, des moyens pour mettre en oeuvre un procédé d'attribution de bits par fréquence porteuse.

Selon l'exemple du système de la Fig.1, deux modems courant porteur CPL1 et CPL2 sont représentés à titre d'illustration. Le modem CPL1 est relié, d'une part, au port S de la passerelle GW via par exemple un câble Ethernet ETH et, d'autre part, à une prise électrique PE1 du réseau électrique privé qui est située à proximité de la passerelle GW. Le modem CPL2 est relié, d'une part, à un équipement EQ1 de l'abonné et, d'autre part, à une autre prise PE2 du réseau électrique privé qui est située à proximité de l'équipement EQ1. Par exemple, l'équipement EQ1 est une *set top box* STB qui comprend un décodeur de flux vidéo et qui est reliée à un poste de télévision TV par un câble vidéo CTV.

Ainsi, les données portées par le signal à destination de l'équipement EQ1, sont acheminées depuis l'équipement réseau ER jusqu'au modem CPL1 via la ligne Lext et la passerelle GW. Le modem CPL1 obtient alors un signal courant porteur qui est porteur de ces données. Ce signal est alors accessible à partir de n'importe quelle prise électrique du réseau électrique privé et notamment de la prise électrique PE2 sur laquelle est branché le modem CPL2. Le modem CPL2 obtient alors un signal à partir de ce signal courant porteur et l'achemine jusqu'à l'équipement EQ1 via une liaison de type Ethernet ETH.

Le système de distribution chez un abonné de services numériques de la Fig. 1 est un exemple de système qui peut être étendu à un système de distribution de services numériques pour un groupe d'abonnés qui se situent, par exemple dans un immeuble. En effet, dans ce cas, l'équipement réseau ER regroupe le trafic de données transitant sur les lignes téléphoniques des différents abonnés, et redirige ces différents trafics vers le réseau Internet. D'autre part, cet équipement dé-multiplexe les données de trafic qui lui arrivent et achemine un signal porteur de ces données via la ligne téléphonique Lext jusqu'à une passerelle qui est, dans ce cas, reliée à la passerelle GW de l'installation domestique de chaque abonné. Dans ce cas, la ligne téléphonique Lext peut se trouver à proximité d'une ligne d'un réseau électrique.

Il a été observé que lorsque les technologies de type VDSL et CPL étaient mises en oeuvre, les signaux portés par le réseau électrique et par le réseau téléphonique interfèrent les uns avec les autres, dès qu'une ligne du réseau électrique se trouve à proximité d'une ligne du réseau téléphonique.

En effet, comme ces technologies utilisent la même bande de fréquences, et le même principe de modulation multi-porteuses, en l'occurrence OFDM, et que les lignes téléphoniques sont souvent à proximité des lignes électriques tels que illustrées à la Fig. 1 par les zones Z1 et Z2 dans lesquelles les lignes Lpots et Le sont à proximité l'une de l'autre, ces lignes sont couplées entre elles c'est-à-dire que les signaux portés par ces lignes interfèrent par radiation les uns avec les autres.

De plus, comme le modem MDSL et le modem courant porteur (CPL1) doivent être situés à proximité l'un de l'autre et que tout modem doit être alimenté électriquement, il est courant que l'alimentation des modems utilisés dans un système de distribution de services numériques ci-dessus se fasse à partir d'une même branche d'un réseau électrique, c'est-à-dire alimentés par une source électrique PW de la Fig. 1, ce qui provoque des interférences par conduction entre ces modems.

Ces deux types d'interférences ont pour conséquence de polluer les signaux portés à la fois par la ligne téléphonique Lpots et par la ligne électrique Le, pollution qui se traduit, notamment, par des pertes de débit au niveau de la transmission du signal porté par la ligne téléphonique Lpots.

Des études ont été menées pour mettre en évidence ces types d'interférences. On peut citer notamment le document de Lukasz Zbydniewski et al. Intitulé « Performance analysis of uncoded/coded windowed-OFDM and circular wavelet-OFDM transmission in PLC channel with bit-loading », Signals and Electronicsystems, 2008, ICSES'08, International Conférence on, IEEE, PIScataway, NJ, USA, 2008-09-14, p. 423-426, ou encore le document de Akiyama et al. Intitulé : « Influence of a PLC signal induces into the modem on the communication performance of VDSL », Electromagnetic Compatibility, 2003, EMC'03, IEE International Symposium on Istanbul, Turkey, 11-16 May 2003, Piscataway, NJ, USA, IEEE, vol. 1, 2003-05-11, p. 197-200 ou encore la demande de brevet américain US 2008/247537A1.

Le document de Hazen M. E. intitulé « The Technology Behind HomePlug AV Powerline Communications », Computer, IEEE Service Center, LOS ALAMITOS, CA US, Vol. 41, N°. 6, 1 Juin 2008, pages 90-92, présente un procédé de réduction de ces interférences qui consiste à utiliser ou non des fréquences porteuses de données sur la ligne courant porteur. Ce procédé ne tient pas compte du couplage entre la ligne électrique et la ligne téléphonique.

Ainsi, de manière générale, l'un des buts de la présente invention est de réduire les interférences entre un signal courant porteur transmis sur une ligne électrique et un signal de type VDSL transmis sur une ligne téléphonique qui est située à proximité de la ligne électrique, que ces lignes fassent partie d'un système de distribution de services numériques chez un abonné ou d'un système prévu pour acheminer des données jusqu'à plusieurs installations domestiques d'abonnés.

A cet effet, selon l'un de ses aspects, la présente invention concerne un procédé de réduction des interférences entre un signal courant porteur transmis sur une ligne électrique et un signal (e.g. de type VDSL) transmis sur une ligne téléphonique qui est située à proximité de la ligne électrique. Lesdits signaux acheminant des données sous forme de bits qui sont attribués à des fréquences porteuses réparties selon des plans de fréquence différents, le procédé est caractérisé en ce qu'il comporte une étape pour déterminer au moins une fréquence porteuse, dite fréquence VDSL, d'un plan de fréquence utilisé pour la transmission du signal de type VDSL, dont le niveau de densité spectrale de puissance est supérieur à un seuil prédéterminé, une étape pour déterminer au moins une fréquence porteuse, dite fréquence CPL, d'un autre plan de fréquence utilisé pour la transmission du signal courant porteur et qui est commune avec au moins une fréquence VDSL ainsi déterminée, et une étape pour diminuer la quantité de bits attribués jusque-là à chaque fréquence CPL ainsi déterminée.

Le procédé d'attribution de bits des technologies (normes) CPL attribue une quantité de bits à transmettre par fréquence porteuse en ne tenant compte que du rapport signal sur bruit estimé sur le canal de transmission de la ligne électrique et donc en ne tenant pas compte de l'effet du couplage entre la ligne téléphonique et la ligne électrique lorsque celles-ci se situent à proximité l'une de l'autre.

L'inventeur a observé que l'effet de ce couplage entre la ligne téléphonique et la ligne électrique était pour l'essentiel dû aux niveaux élevés de puissance de certaines fréquences porteuses utilisées pour la transmission des symboles OFDM sur la ligne électrique. Par ailleurs il a observé que, malgré que les plans de fréquence des technologies VDSL et CPL soient différents, certaines de ces fréquences porteuses avaient des valeurs communes c'est-à-dire soit identiques, soit proches de celles des fréquences porteuses de la technologie VDSL.

Ainsi, en comparant le niveau de densité spectrale de puissance des fréquences porteuses utilisées pour la transmission d'un signal de type VDSL à une valeur de seuil prédéterminée, le procédé, selon l'invention, permet de déterminer les fréquences porteuses du signal courant porteur qui perturbent le signal de type VDSL et de diminuer le niveau de puissance de ces fréquences porteuses par diminution des quantités de bits qui leur étaient attribués préalablement.

Selon un autre de ses aspects, le présente invention concerne un dispositif qui comporte des moyens pour mettre en oeuvre le procédé de réduction des interférences entre un tel signal courant porteur transmis sur une ligne électrique et un tel signal (e.g. de type VDSL) transmis sur une ligne téléphonique.

Selon un autre de ses aspects, la présente invention concerne également un modem courant porteur qui comporte un tel dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

> La Fig. 1 représente un exemple d'un système de distribution de tels services numériques jusqu'au domicile d'un abonné,
> La Fig. 2 représente une illustration du profil de densité spectrale de puissance des fréquences de porteuses selon une technologie VDSL,
> La Fig. 3 représente des chronogrammes représentant schématiquement un exemple d'attribution de bits aux fréquences porteuses d'un plan de fréquence selon un rapport signal à bruit SNRVDSL estimé,
> La Fig. 4 représente un exemple de mise en oeuvre du procédé de réduction des interférences selon l'invention.

Par la suite est décrite l'invention dans le cas où le signal porté par une ligne téléphonique est de type VDSL2. Toutefois, il est évident que l'invention peut également s'appliquer à d'autres types de signaux tant que ces signaux utilisent un procédé de codage par multiporteuses.

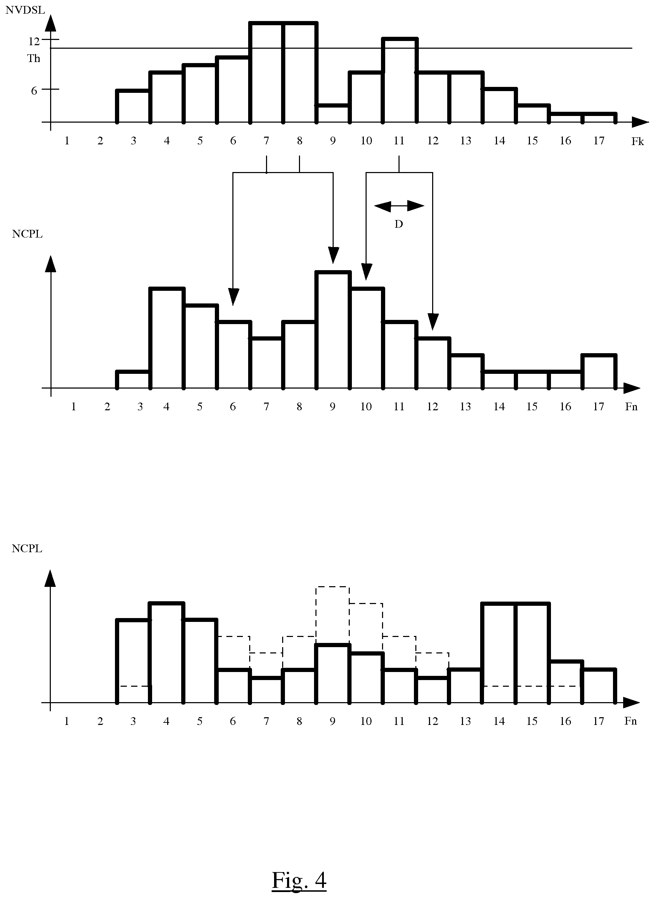

La Fig. 4 représente un exemple de mise en oeuvre du procédé de réduction des interférences selon l'invention.

Le chronogramme du haut de la Fig. 4 reprend l'exemple d'attribution de bits de la Fig. 3.

Le procédé de réduction comporte une étape 1 pour déterminer au moins une fréquence porteuse $F_{VDSL}$, dite fréquence VDSL, d'un plan de fréquence utilisé pour la transmission du signal $S_{VDSL}$ de type VDSL dont le niveau de densité spectrale de puissance est supérieur à un seuil prédéterminé Th. On peut noter que le seuil prédéterminé Th est représenté sur la Fig. 4 comme étant un nombre maximal de bits attribué à une fréquence porteuse. Ce qui est équivalent à déterminer un niveau maximal de densité spectrale de puissance qui est proportionnel à ce nombre de bits.

Selon cet exemple, on voit que les fréquences référencées 7, 8 et 11 sont alors déterminées comme étant des fréquences $F_{VDSL}$.

On peut noter que au cours de l'étape 1, les fréquences porteuses de chacun des deux plans de fréquence (997/998) utilisées par une technologie VDSL sont considérées. Ainsi, dans le cas du VDSL2, les niveaux de densité spectrale de puissance des fréquences porteuses situées dans la bande 25KHz à 12MHz et dans la bande de 12Mhz à 30Mhz sont analysés.

Le procédé de réduction des interférences comporte également une étape 2 pour déterminer au moins une fréquence porteuse $F_{CPL}$, dite fréquence CPL, d'un plan de fréquence utilisé pour la transmission du signal courant porteur et qui est commune avec au moins une fréquence $F_{VDSL}$ ainsi déterminée.

Selon un mode de réalisation, une fréquence CPL et une fréquence VDSL sont communes lorsqu'elles sont séparées d'une distance inférieure à une distance maximale prédéterminée D qui peut être soit nulle, c'est-à-dire que les fréquences VDSL et CPL sont égales, soit supérieure à zéro que ce soit au sens strict ou large.

De préférence, la distance est définie par la différence entre le sinus cardinal de la fréquence porteuse du signal $S_{VDSL}$ pondérée par un filtre qui limite les lobes secondaires du sinus cardinal, et le sinus cardinal de la fréquence porteuse du signal courant porteur $S_{CPL}$ pondérée par un filtre qui limite les lobes secondaires du sinus cardinal.

Le chronogramme du milieu de la Fig. 4 représente un exemple d'attribution de bits aux fréquences porteuses d'un plan de fréquence selon un rapport signal à bruit estimé sur la ligne électrique Le et en respectant les contraintes imposées par un profil de densité spectrale de puissance défini par la technologie (norme) CPL. La distance D est ici supérieure au sens large à 0. Selon cet exemple, les fréquences référencées 6, 7 et 8 du plan de fréquence utilisé par la transmission du signal courant porteur $S_{CPL}$, sont déterminées comme étant communes à la fréquence $F_{VDSL}$ référencée 7. De même, les fréquences référencées 7, 8 et 9 sont déterminées comme étant communes à la fréquence $F_{VDSL}$ référencée 8 et les fréquences référencées 10, 11 et 12 sont déterminées comme étant communes à la fréquence $F_{VDSL}$ référencée 11. En définitive, selon cet exemple, les fréquences référencées 6 à 12 incluses du plan de fréquence utilisé par la transmission du signal courant porteur $S_{CPL}$ sont les fréquences $F_{CPL}$ déterminées au cours de l'étape 2.

Le procédé comporte également une étape 3 pour diminuer le nombre de bits $N_{CPL}$ attribué jusque-là à chaque fréquence $F_{CPL}$ ainsi déterminée.

Selon un mode de réalisation, le nombre de bits $N_{CPL}$ attribué à une fréquence $F_{CPL}$ est diminué jusqu'à ce que l'interférence de cette fréquence $F_{CPL}$ sur le signal $S_{VDSL}$ soit compensée par un code correcteur d'erreurs utilisé pour coder les données portées par le signal $S_{VDSL}$.

En réduisant le nombre de bits attribués sur chaque fréquence $F_{CPL}$, le niveau de densité spectrale de puissance diminue ce qui provoque une diminution des interférences du signal $S_{CPL}$ sur le signal $S_{VDSL}$. Toutefois, le nombre de bits total émis est alors inférieur à ce qu'il était juste avant cette diminution, ce qui provoque une chute du débit de transmission.

Selon une variante du procédé qui permet de conserver un débit de transmission constant, les bits qui ne sont plus attribués à une fréquence $F_{CPL}$ sont attribués à au moins une fréquence porteuse $F_k$ du plan de fréquence utilisé pour la transmission du signal $S_{CPL}$, autre qu'une fréquence $F_{CPL}$. Ainsi, le procédé diminue les interférences entre les signaux $S_{CPL}$ et $S_{VDSL}$ en diminuant les niveaux de densité spectrale des fréquences CPL qui sont responsables de ces interférences tout en conservant un débit de transmission par courant porteur constant en étalant ces bits sur des fréquences porteuses qui ne créent pas d'interférences significatives avec le signal $S_{VDSL}$.

Le chronogramme du bas de la Fig. 4 représente l'attribution des bits par fréquence de porteuses pour un schéma de modulation déterminé, une fois que le procédé ci-dessus a été exécuté. Selon cet exemple, le nombre de bits de chaque fréquence $F_{CPL}$ est divisé par 2. Ainsi, le nombre de bits attribués à chacune des fréquences référencées 6 à 12 est divisé par 2. Par ailleurs, selon cet exemple, admettons que les fréquences référencées 3, 14, 15 et 16 ont chacune un rapport signal sur bruit estimé sur le canal de transmission de la ligne électrique élevée. Les bits qui ne sont plus attribués aux fréquences $F_{CPL}$, sont alors attribués sur ces trois fréquences qui ne sont pas, bien évidemment, elles-mêmes des fréquences $F_{CPL}$.

Comme on l'a vu dans la partie introductive, chaque fréquence porteuse, et donc chaque fréquence $F_{CPL}$, porte les bits de symbole QAM (ou PSK).

Selon une variante, la modulation des données à transmettre qui est utilisée jusqu'alors pour obtenir des symboles QAM dont les bits sont attribués aux différentes fréquences porteuses, est remplacée par une autre modulation qui requiert des longueurs de symboles moins importantes.

Par exemple, admettons que jusqu'alors une modulation 16QAM soit utilisée, cette modulation peut être remplacée par une modulation 4QAM afin de diviser par 4 la longueur des symboles.

Le procédé de réduction selon l'invention peut être lancé uniquement dès que les bits de symboles QAM ont été attribués aux différentes fréquences porteuses des plans de fréquence utilisés pour les transmissions sur les lignes électriques et téléphoniques.

Il est toutefois préférable que ce procédé soit itéré car les caractéristiques des canaux de transmission sur la ligne téléphonique et surtout sur la ligne électrique varient fortement, en particulier, à cause de la mise en route et l'arrêt d'appareils domestiques sur la ligne électrique Le.

Selon un mode de réalisation, le procédé est donc itéré périodiquement.

Selon un autre mode de réalisation, le procédé est itéré dès que les caractéristiques du canal de transmission sur la ligne électrique et/ou celles du canal de transmission sur la ligne téléphonique varient.

Selon un autre de ses aspects, la présente invention concerne un dispositif de réduction des interférences entre un signal courant porteur $S_{CPL}$ et un signal $S_{VDSL}$.

Ce dispositif comporte des moyens pour mettre en oeuvre un procédé pour attribuer un nombre de bits à chaque fréquence porteuse d'un plan de fréquence utilisé par la transmission sur la ligne électrique.

En particulier, ce dispositif comporte des moyens pour obtenir les fréquences porteuses du plan de fréquence utilisé par la transmission sur la ligne téléphonique et des moyens pour déterminer si ces fréquences porteuses ont un niveau de densité spectrale de puissance supérieure au seuil Th.

Ce dispositif comporte également des moyens pour déterminer qu'une fréquence porteuse $F_{CPL}$ est commune avec une fréquence $F_{VDSL}$ ainsi déterminée, et des moyens pour diminuer le nombre de bits $N_{CPL}$ attribué jusque-là à chaque fréquence $F_{CPL}$ ainsi déterminée.

Selon un autre de ses aspects, la présente invention concerne un modem courant porteur CPL1, CPL2, qui implémente, par exemple sous forme numérique, un procédé pour attribuer un nombre de bits à chaque fréquence porteuse d'un plan de fréquence utilisé par la transmission sur la ligne électrique. Le modem courant porteur est particulier en ce qu'il implémente, également sous forme numérique, les moyens du dispositif ci-dessus. Pour cela, selon un mode de réalisation, les moyens du dispositif pour obtenir les fréquences porteuses du plan de fréquence utilisé par la transmission sur la ligne téléphonique sont prévus pour que, lors de périodes de silence sur le canal de transmission de la ligne courant porteur, c'est-à-dire, lorsque aucun symbole OFDM n'est transmis sur ce canal, ces moyens amplifient le signal de type VDSL pour que les symboles OFDM portés par ce signal soient reçus par le récepteur OFDM du modem courant porteur.

**Revendications**

**1.** Procédé de réduction d'interférences entre un premier signal transmis sur une ligne téléphonique (Lpots) et un second signal, de type courant porteur, transmis sur une ligne électrique (Le) qui est située à proximité de la ligne téléphonique (Lpots), le premier signal acheminant des données sous forme de bits qui sont attribués à des fréquences porteuses réparties selon un premier plan de fréquences, le second signal acheminant des données sous forme de bits qui sont attribués à des fréquences porteuses réparties selon un second plan de fréquences, **caractérisé en ce qu'**il comporte les étapes suivantes :

- déterminer au moins une première fréquence porteuse du premier plan de fréquences, dont le niveau de densité spectrale de puissance est supérieur à un seuil prédéterminé (Th),
- déterminer au moins une seconde fréquence porteuse du second plan de fréquences, qui est commune avec au moins une dite première fréquence porteuse déterminée, et
- diminuer une quantité de bits ($N_{CPL}$) du second signal qui étaient attribués jusque-là à chaque dite seconde fréquence porteuse déterminée.

2. Procédé selon la revendication 1, **caractérisé en ce qu'**une dite fréquence porteuse du premier plan de fréquences et une dite fréquence porteuse du second plan de fréquences sont communes lorsqu'elles sont séparées d'une distance inférieure à une distance maximale prédéterminée.

3. Procédé selon l'une quelconque des revendications 1 et 2, **caractérisé en ce que** la quantité de bits attribués à chaque dite seconde fréquence porteuse est diminuée jusqu'à ce que l'interférence de ladite seconde fréquence porteuse sur le premier signal soit compensée par un code correcteur d'erreurs utilisé pour coder les données acheminées par le premier signal.

4. Procédé selon l'une quelconque des revendications 1 à 3, caractérisé en qu'il comporte en outre l'étape suivante :

- attribuer des bits, qui ne sont plus attribués à une dite seconde fréquence porteuse, à au moins une fréquence porteuse du second plan de fréquences qui ne soit pas une dite seconde fréquence porteuse.

5. Procédé selon l'une quelconque des revendications 1 à 4, **caractérisé en ce que** les bits du second signal sont obtenus par modulation QAM et **en ce que** la modulation QAM utilisée jusque-là pour obtenir lesdits bits est remplacée par une autre modulation qui requiert des longueurs de symboles moins importantes.

6. Procédé selon l'une quelconque des revendications 1 à 5, **caractérisé en ce que** ledit procédé est itéré périodiquement.

7. Procédé selon l'une quelconque des revendications 1 à 5, **caractérisé en ce que** ledit procédé est itéré dès que les caractéristiques du canal de transmission sur la ligne électrique et/ou celles du canal de transmission sur la ligne téléphonique varient.

8. Dispositif destiné à réduire des interférences entre un premier signal transmis sur une ligne téléphonique (Lpots) et un second signal, de type courant porteur, transmis sur une ligne électrique (Le) qui est située à proximité de la ligne téléphonique (Lpots), le premier signal acheminant des données sous forme de bits qui sont attribués à des fréquences porteuses réparties selon un premier plan de fréquences, le second signal acheminant des données sous forme de bits qui sont attribués à des fréquences porteuses réparties selon un second plan de fréquences, **caractérisé en ce que** ledit dispositif comporte :

- des moyens pour déterminer au moins une première fréquence porteuse du premier plan de fréquences, dont le niveau de densité spectrale de puissance est supérieur à un seuil prédéterminé (Th),
- des moyens pour déterminer au moins une seconde fréquence porteuse du second plan de fréquences, qui est commune avec au moins une dite première fréquence porteuse déterminée, et
- des moyens pour diminuer une quantité de bits ($N_{CPL}$) du second signal qui étaient attribués jusque-là à chaque dite seconde fréquence porteuse déterminée.

9. Modem courant porteur (CPL1, CPL2), **caractérisé en ce qu'**il comporte un dispositif selon la revendication 8.

10. Modem courant porteur selon la revendication 9, **caractérisé en ce qu'**il comporte des moyens pour obtenir les fréquences porteuses du premier plan de fréquences, tels que, lors de périodes de silence sur le canal de transmission de la ligne électrique, lesdits moyens amplifient le premier signal pour que des symboles portés par ledit premier signal soient reçus par ledit modem courant porteur.

**Patentansprüche**

1. Verfahren zur Reduzierung von Interferenzen zwischen einem ersten auf einer Telefonleitung (Lpots) übertragenen Signal und einem zweiten Signal von der Art Trägerstrom, das auf einer elektrischen Leitung (Le) übertragen wird, die sich in der Nähe der Telefonleitung (Lpots) befindet, wobei das erste Signal Daten in Form von Bits befördert, die Trägerfrequenzen zugewiesen sind, welche gemäß einer ersten Frequenzebene verteilt sind, wobei das zweite Signal Daten in Form von Bits befördert, die Trägerfrequenzen zugewiesen sind, welche gemäß einer zweiten Frequenzebene verteilt sind, **dadurch gekennzeichnet, dass** es die folgenden Schritte aufweist:

- Bestimmen mindestens einer ersten Trägerfrequenz der ersten Frequenzebene, deren Leistungsspektraldichtepegel höher als eine vorbestimmte Schwelle (Th) ist,
- Bestimmen mindestens einer zweiten Trägerfrequenz der zweiten Frequenzebene, die mit mindestens einer ersten bestimmten Trägerfrequenz gemeinsam ist, und
- Verringern einer Menge von Bits ($N_{CPL}$) des zweiten Signals, die bis dahin jeder bestimmten zweiten Trägerfrequenz zugewiesen waren.

2. Verfahren nach Anspruch 1, **dadurch gekennzeichnet, dass** eine Trägerfrequenz der ersten Frequenzebene und eine Trägerfrequenz der zweiten Frequenzebene gemeinsam sind, wenn sie um einen Abstand getrennt sind, der geringer ist als ein vorbestimmter maximaler Abstand.

3. Verfahren nach einem der Ansprüche 1 und 2, **dadurch gekennzeichnet, dass** die Menge von jeder zweiten Trägerfrequenz zugewiesenen Bits verringert wird, bis die Interferenz der zweiten Trägerfrequenz im ersten Signal durch einen Fehlerkorrekturcode kompensiert wird, der verwendet wird, um die vom ersten Signal beförderten Daten zu codieren.

4. Verfahren nach einem der Ansprüche 1 bis 3, **dadurch gekennzeichnet, dass** es außerdem den folgenden Schritt aufweist:

- Zuweisen der Bits, die nicht mehr einer zweiten Trägerfrequenz zugewiesen sind, zu mindestens einer Trägerfrequenz der zweiten Frequenzebene, die keine zweite Trägerfrequenz ist.

5. Verfahren nach einem der Ansprüche 1 bis 4, **dadurch gekennzeichnet, dass** die Bits des zweiten Signals durch QAM-Modulation erhalten werden, und dass die bis dahin zum Erhalt der Bits verwendete QAM-Modulation durch eine andere Modulation ersetzt wird, die weniger große Symbollängen erfordert.

6. Verfahren nach einem der Ansprüche 1 bis 5, **dadurch gekennzeichnet, dass** das Verfahren periodisch wiederholt wird.

7. Verfahren nach einem der Ansprüche 1 bis 5, **dadurch gekennzeichnet, dass** das Verfahren wiederholt wird, sobald die Merkmale des Übertragungskanals auf der elektrischen Leitung und/oder diejenigen des Übertragungskanals auf der Telefonleitung variieren.

8. Vorrichtung, die dazu bestimmt ist, Interferenzen zwischen einem ersten auf einer Telefonleitung (Lpots) übertragenen Signal und einem zweiten Signal von der Art Trägerstrom zu reduzieren, das auf einer elektrischen Leitung (Le) übertragen wird, die sich in der Nähe der Telefonleitung (Lpots) befindet, wobei das erste Signal Daten in Form von Bits befördert, die Trägerfrequenzen zugewiesen sind, welche gemäß einer ersten Frequenzebene verteilt sind, wobei das zweite Signal Daten in Form von Bits befördert, die Trägerfrequenzen zugewiesen sind, welche gemäß einer zweiten Frequenzebene verteilt sind, **dadurch gekennzeichnet, dass** die Vorrichtung aufweist:

- Einrichtungen, um mindestens eine erste Trägerfrequenz der ersten Frequenzebene zu bestimmen, deren Leistungsspektraldichtepegel höher als eine vorbestimmte Schwelle (Th) ist,
- Einrichtungen, um mindestens eine zweite Trägerfrequenz der zweiten Frequenzebene zu bestimmen, die mit mindestens einer ersten bestimmten Trägerfrequenz gemeinsam ist, und
- Einrichtungen, um eine Menge von Bits ($N_{CPL}$) des zweiten Signals zu verringern, die bis dahin jeder bestimmten zweiten Trägerfrequenz zugewiesen waren.

9. Trägerstrom-Modem (CPL1, CPL2), **dadurch gekennzeichnet, dass** es eine Vorrichtung nach Anspruch 8 aufweist.

10. Trägerstrom-Modem nach Anspruch 9, **dadurch gekennzeichnet, dass** es Einrichtungen aufweist, um die Trägerfrequenzen der ersten Frequenzebene zu erhalten, derart, dass bei Stilleperioden auf dem Übertragungskanal der elektrischen Leitung die Einrichtungen das erste Signal verstärken, damit vom ersten Signal getragene Symbole vom Trägerstrom-Modem empfangen werden.

**Claims**

1. Method for reducing interference between a first signal transmitted on a telephone line (Lpots) and a second signal, of power-line communication type, transmitted on an electrical line (Le) which is situated in proximity to the telephone line (Lpots), the first signal conveying data in the form of bits which are allocated to carrier frequencies distributed according to a first frequency plan, the second signal conveying data in the form of bits which are allocated to carrier frequencies distributed according to a second frequency plan, **characterized in that** it comprises the following steps:

- determining at least one first carrier frequency of the first frequency plan, whose power spectral density level is greater than a predetermined threshold (Th),
- determining at least one second carrier frequency of the second frequency plan, which is common with at least one said first determined carrier frequency, and
- decreasing a quantity of bits ($N_{CPL}$) of the second signal which were allocated hitherto to each said second determined carrier frequency.

2. Method according to Claim 1, **characterized in that** a said carrier frequency of the first frequency plan and a said carrier frequency of the second frequency plan are common when they are separated by a distance of less than a predetermined maximum distance.

3. Method according to either one of Claims 1 and 2, **characterized in that** the quantity of bits allocated to each said second carrier frequency is decreased until the interference of said second carrier frequency on the first signal is compensated by an error-correcting code used to code the data conveyed by the first signal.

4. Method according to any one of Claims 1 to 3, **characterized in that** it furthermore comprises the following step:

- allocating bits, which are no longer allocated to a said second carrier frequency, to at least one carrier frequency of the second frequency plan which is not a said second carrier frequency.

5. Method according to any one of Claims 1 to 4, **characterized in that** the bits of the second signal are obtained by QAM modulation and **in that** the QAM modulation used hitherto to obtain said bits is replaced with another modulation which requires less significant symbol lengths.

6. Method according to any one of Claims 1 to 5, **characterized in that** said method is iterated periodically.

7. Method according to any one of Claims 1 to 5, **characterized in that** said method is iterated as soon as the characteristics of the transmission channel on the electrical line and/or those of the transmission channel on the telephone line vary.

8. Device intended to reduce interference between a first signal transmitted on a telephone line (Lpots) and a second signal, of power-line communication type, transmitted on an electrical line (Le) which is situated in proximity to the telephone line (Lpots), the first signal conveying data in the form of bits which are allocated to carrier frequencies distributed according to a first frequency plan, the second signal conveying data in the form of bits which are allocated to carrier frequencies distributed according to a second frequency plan, **characterized in that** said device comprises:

- means for determining at least one first carrier frequency of the first frequency plan, whose power spectral density level is greater than a predetermined threshold (Th),
- means for determining at least one second carrier frequency of the second frequency plan, which is common with at least one said first determined carrier frequency, and
- means for decreasing a quantity of bits ($N_{CPL}$) of the second signal which were allocated hitherto to each said second determined carrier frequency.

9. Power-line communication modem (CPL1, CPL2), **characterized in that** it comprises a device according to Claim 8.

10. Power-line communication modem according to Claim 9, **characterized in that** it comprises means for obtaining the carrier frequencies of the first frequency plan, such that, during periods of silence on the transmission channel of the electrical line, said means amplify the first signal so that symbols carried by said first signal are received by said power-line communication modem.

Fig. 1

PSDVDSL

0,025                    12                                    30

## Fig. 2

NVDSL

12

6

1   2   3   4   5   6   7   8   9   10  11  12  13  14  15  16  17   Fk

SNRVDSL

1   2   3   4   5   6   7   8   9   10  11  12  13  14  15  16  17   Fk

## Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008247537 A1

**Littérature non-brevet citée dans la description**

- HomePlug AV baseline spécification. HomePlug PowerLine Alliance, Décembre 2005
- Performance analysis of uncoded/coded windowed-OFDM and circular wavelet-OFDM transmission in PLC channel with bit-loading. **LUKASZ ZBYDNIEWSKI et al.** Signais and Electronicsystems, 2008, ICSES'08, International Conférence on. IEEE, 14 Septembre 2008, 423-426
- Influence of a PLC signal induces into the modem on the communication performance of VDSL. **AKIYAMA et al.** Electromagnetic Compatibility, 2003, EMC'03, IEE International Symposium on Istanbul. IEEE, 11 Mai 2003, vol. 1, 197-200
- **HAZEN M. E.** The Technology Behind HomePlug AV Powerline Communications. Computer, IEEE Service Center, 01 Juin 2008, vol. 41, 90-92